# EUROPEAN PATENT SPECIFICATION

(11) **EP 3 747 265 B1**
(45) Date of publication and mention of the grant of the patent: **08.03.2023**
(21) Application number: 20178258.8
(22) Date of filing: 04.06.2020
(51) Int. Cl.: A01M 25/00, A01K 7/06

(54) **LIQUID SELF-DISPENSING DEVICE FOR SMALL ANIMALS**
VORRICHTUNG ZUM SELBSTBETÄTIGTEN AUSGEBEN VON FLÜSSIGKEIT AN KLEINTIERE
DISPOSITIF D'AUTO-DISTRIBUTION DE LIQUIDE POUR PETITS ANIMAUX

(30) Priority: 06.06.2019 ES 201930514
(43) Date of publication of application: 09.12.2020
(73) Proprietor: Laboratorios Agrochem, S.L., 08292 Esparraguera (ES)
(72) Inventor: LOPEZ AZNAR, Xavier, 08292 ESPARRAGUERA (ES)
(74) Representative: Toro Gordillo, Ignacio Maria

(56) References cited:
- ES-A1- 2 538 737
- US-A- 5 816 194
- US-A1- 2017 245 461

## Description

### TECHNICAL FIELD

The present invention relates to a liquid self-dispensing device for small animals, to be used as means, among other uses, for example for supplying rat poison for the extermination of rats.

The object of the invention is to provide a device with a simple but very effective structure, wherein it is not possible for liquid to spill when handled if the nozzle thereof is not acted on, and with a structure that facilitates the administration of the liquid in the event of any friction or actuation with the animal, regardless of the direction in which said force is applied, providing a greater range of operation and all of this with adjustable sensitivity and a high degree of safety.

Although the preferred practical field of application for the invention is that of anti-rodent devices, the invention could also be applied in the field of drinking troughs for animals as well as for dispensing and/or dosing and/or supplying, for various purposes, another type of liquid substance.

### BACKGROUND OF THE INVENTION

The prior art patent ES 2538737 A1 describes a device for dosing liquid rat poisons based on a stable positioning base on the ground, which incorporates an upper neck and a tray which is accessed by the liquid rat poison, with the particular feature that an upper tank is coupled on the upper neck, the base of which is able to be perforated by means of elements established to this end inside the neck of the base, in order for the liquid rat poison to be able to flow through a tube to the outlet, wherein there are balls that block said outlet, and prevent the liquid tray or bowl from spilling.

In this device, the valve or closure element consists of balls that work using gravity, which must be axially pressed on the aforementioned tube by the animal in order to carry out the opening and outlet of the liquid, such that it offers a minimum pressure surface, wherein said pressure must have a main component axial to the tube, which considerably limits the possibility that it may be accidentally actuated by the rodent.

Furthermore, when the spheres work using gravity, when the device is moved from one application area to another it is common for the liquid contained in the tank thereof to be accidentally spilled, if the device is not carried in an exact position.

Other limitations of this type of device are the lack of regulation of sensitivity when dosing the liquid.

The surface tension and the viscosity of some liquids to be dosed can affect the outlet thereof, and some of the solid components dissolved in the formulations, due to evaporation of the solvents, can create sediments, causing the balls to be blocked and interrupting the supply. On the other hand, depending on how the system is stuck, unwanted spills may occur.

### DESCRIPTION OF THE INVENTION

The liquid dosing device as defined in claim 1 solves the aforementioned problems in a completely satisfactory manner, based on a simple but effective solution.

To do so, and more specifically, the device of the invention is made from a tank and a tray for receiving the liquid from a dispensing element attached to the tank, the tray being established on a wide base which is equipped on one of the ends thereof with an extension with a vertical expansion wherein an upper appendage is defined wherein a rod is able to be plugged, which is provided with a dosing body, wherein a narrowing is defined from which a neck acting as an outlet nozzle emerges, a narrowing on which an elongated valve element is positioned, which ends in a flange on the top. In an embodiment of the invention a sealing gasket is established top- on the internal surface of the flange which ensures the leak-tight closure of the nozzle while the valve element is not acted on.

Said end flange of the valve element defines a support surface for a spring or elastic element which maintains said valve element pressed in a closed position, such that the dosing body, which has the upper end thereof in a cylindrical configuration, will include a regulation and/or fastening system independent from the threading of the neck of the tank containing the product, which initially will come sealed. In an embodiment of the invention the elastic element includes piercing elements on the upper face thereof which in the coupling by threading or by any other conventional means of the dosing body in the neck of the liquid tank, the seal is pierced, enabling the passage of the product to the inside of said dosing body, this being retained by the valve element.

This special structuring means that the device can be moved from one implementation site to another without the risk of the product being poured out of the tank containing it regardless of the position in which the valve element is arranged, as long as it is not acted upon, unlike what occurred with the conventional devices of this type.

In this manner, the valve element will protrude a certain distance from the nozzle, such that it can be moved both axially and laterally within the dosing body, offering multiple ways the device can be operated by the rat, which improves the effectiveness thereof.

In accordance with another embodiment of the invention, it has been envisaged that the neck acting as a dosing nozzle for the product remain in an assembly location below the edge of the tray for receiving the liquid, such that the overflow of said fluid is not possible once said maximum capacity level of the tray has been reached.

This system solves the problems derived from the physical features of the fluids used, while enabling the working pressures of the plug to be adjusted, in order to better adapt to the viscosity and surface tension features of the liquids to be dispensed.

### DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:
Figure 1 shows a perspective and exploded view of a self-dispensing device for liquid rat poison made in accordance with the object of the present invention.
Figure 2 shows a cross-sectional view of the device of the invention at the level of the dispensing means provided therein.

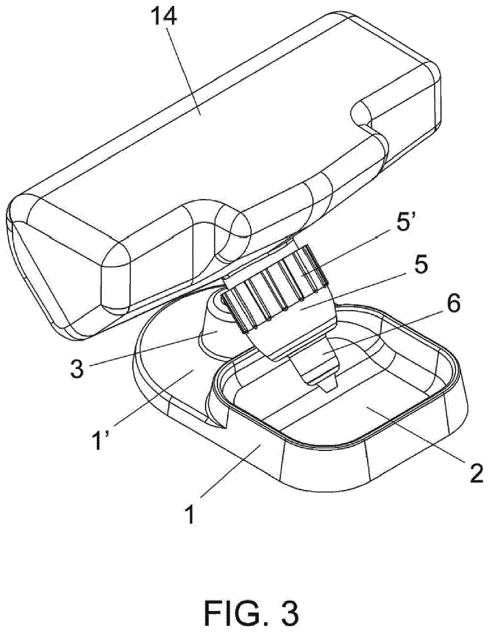

Figure 3 shows, finally, a perspective view of the properly-assembled device.

### PREFERRED EMBODIMENT OF THE INVENTION

In view of the outlined figures, it can be seen how the liquid-dispensing device of the invention is made from a wide base (1), wherein a tray (2) for receiving the liquid is established, as well as an extension (1') wherein an upper appendage (3) is defined wherein a rod (4) is able to be plugged, which is provided with a dosing body (5) wherein a cylindrical initial segment (5') is defined, provided with means for coupling to the neck (13) of a liquid tank (14), for example by means of threading, pressure or other; dispensing body which undergoes a strong narrowing in the lower area thereof, ending in a neck (6) acting as a nozzle, the narrowing determining a seat (11) wherein an elongated valve body (7) moves, with an end perimeter flange (8) wherein a sealing gasket (10) is established.

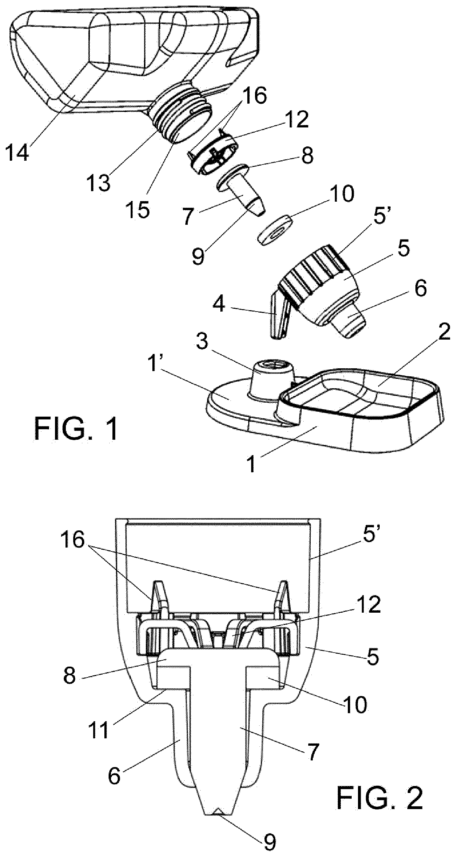

The valve body (7) has a certain clearance with respect to the neck (6) wherein it moves, the extremity (9) thereof partially protruding from said neck, such that, as seen in figure 2, said valve body is able to move not only axially upward, but rather any lateral force to which the extremity (9) thereof is subjected will cause an angular movement in the entire valve body, and consequently the unlinking of the sealing gasket (10) from the seat (11), facilitating the flow of liquid towards the tray (2).

In order to regulate the pressure level that must be carried out on the valve body (7), the dosing body incorporates a perimeter positioner therein, wherein an elastic element (12) is established which flexibly presses on the flange (8) of the valve body (7) and which on the other end thereof ends in a series of spikes or blades (16) for cutting the seal (15) of the liquid tank when the dosing body is coupled in the neck (13) of the liquid tank (14).

In this manner, depending on the position in which the elastic element is fixed between the neck (13) and the dosing body (5), the stress necessary to actuate the valve body (7) and the resulting liquid outlet towards the tray (2) will be able to be gauged, since the elastic element (12) will be subjected to more or less compression with respect to the valve element whereon it rests.

Finally, it must be indicated that the neck (6) acting as a nozzle will be in an assembly arrangement on the base (1) such that the outlet edge of the liquid through the same is arranged slightly below the maximum filling level of the tray (2), so that when said tray is full, said nozzle is immersed, preventing the outflow of more liquid which would cause the overflow of said tray (2).

## Claims

1. A liquid self-dispensing device for small animals, comprising a liquid tank (14) and a tray (2) for receiving the liquid from a dispensing element attached to the liquid tank (14), the tray (2) being established on a wide base (1), **characterised in that** the wide base (1) comprises an extension (1') wherein an upper appendage (3) is defined, a rod (4) being adapted to be plugged therein and being equipped with a dosing body (5), wherein a cylindrical initial segment (5') is defined, provided with means for coupling to the neck (13) of the liquid tank (14), dosing body (5) wherein a lower step or seat (11) is established, which extends downwards into a neck (6) acting as a dosing nozzle for the liquid rat poison, such that an elongated valve body (7) moves in said neck (6), with a perimeter flange (8) for resting and sealing on the seat (11), the valve body (7) having a clearance with respect to the neck (6) wherein it is movable both axially and angularly, the extremity (9) of the valve body (7) protruding from said neck (6), defining the actuation means of the device, said valve body being pushed towards the valve closing position by means of an elastic element (12) which is arranged in a variable position in the neck (13) of the liquid tank (14) and the inside of the dosing body (5), with the particularity that the neck (13) of the liquid tank (14) and the initial cylindrical segment (5') of the dosing body (5) include complementary threading means, a perimeter stepped recess being established in said dosing body (5) whereon the elastic element (12) rests, said elastic element being compressed depending on the level at which it is assembled with respect to the neck (13) of the liquid tank (14) and the dosing body (5).

2. The liquid self-dispensing device for small animals, according to claim 1, **characterised in that** the neck (6) acting as a nozzle in the assembly position on the base (1) is arranged slightly below the maximum filling level which enables the configuration of the tray (2).

3. The liquid self-dispensing device for small animals, according to claim 1, **characterised in that** the flange (8) of the valve element (7) is complemented by a sealing gasket (11).

4. The liquid self-dispensing device for small animals, according to claim 1, **characterised in that** the elastic element (12) includes on the upper face thereof a series of spikes or blades (16) for cutting a seal (15) with which the neck (13) of the liquid tank (14) is equipped.

## Patentansprüche

1. Flüssigkeitsselbstabgabevorrichtung für Kleintiere, umfassend einen Flüssigkeitstank (14) und eine Schale (2) zum Aufnehmen der Flüssigkeit von einem an dem Flüssigkeitstank (14) angebrachten Abgabeelement, wobei die Schale (2) auf einem breiten Boden (1) aufgestellt ist, **dadurch gekennzeichnet, dass** der breite Boden (1) eine Verlängerung (1') umfasst, in der ein oberer Fortsatz (3) definiert ist, in den ein Stab (4) gesteckt werden kann, der mit einem Dosierkörper (5) ausgestattet ist, wobei ein zylindrisches Anfangssegment (5') definiert ist, das mit Mitteln zum Koppeln an den Hals (13) des Flüssigkeitstanks (14) versehen ist, Dosierkörper (5), in dem eine untere Stufe oder Sitz (11) gebildet ist, der sich nach unten in einen als Dosierdüse für das flüssige Rattengift wirkenden Hals (6) erstreckt, so dass sich in diesem Hals (6) ein langgestreckter Ventilkörper (7) mit einem umlaufenden Flansch (8) zum Aufliegen und Abdichten auf dem Sitz (11) bewegt, wobei der Ventilkörper (7) ein Spiel in Bezug auf den Hals (6) aufweist, wobei er sowohl axial als auch winklig bewegbar ist, wobei das Ende (9) des Ventilkörpers (7) von dem Hals (6) vorsteht und die Betätigungsmittel der Vorrichtung definiert, wobei der Ventilkörper mittels eines elastischen Elements (12), das in einer variablen Position in dem Hals (13) angeordnet ist, in die Richtung der Ventilschließstellung des Flüssigkeitstanks (14) und das Innere des Dosierkörpers (5) gedrückt wird, mit der Besonderheit, dass der Hals (13) des Flüssigkeitstanks (14) und das anfängliche zylindrische Segment (5') des Dosierkörpers (5) komplementäre Einschraubmittel umfassen, wobei in dem Dosierkörper (5) eine abgestufte Umfangsvertiefung ausgebildet ist, auf der das elastische Element (12) ruht, wobei das elastische Element in Abhängigkeit von der Höhe zusammengedrückt wird, in der es in Bezug auf den Hals (13) des Flüssigkeitstanks (14) und des Dosierkörpers (5) montiert wird.

2. Flüssigkeitsselbstabgabevorrichtung für Kleintiere nach Anspruch 1, **dadurch gekennzeichnet, dass** der in Montagestellung am Boden (1) als Düse wirkende Hals (6) knapp unterhalb der maximalen Füllstandshöhe angeordnet ist, was die Ausgestaltung der Schale (2) ermöglicht.

3. Flüssigkeitsselbstabgabevorrichtung für Kleintiere nach Anspruch 1, **dadurch gekennzeichnet, dass** der Flansch (8) des Ventilelements (7) durch eine Dichtung (11) ergänzt ist.

4. Flüssigkeitsselbstabgabevorrichtung für Kleintiere nach Anspruch 1, **dadurch gekennzeichnet, dass** das elastische Element (12) auf seiner oberen Fläche eine Reihe von Spitzen oder Klingen (16) zum Durchschneiden einer Dichtung (15) umfasst, mit der der Hals (13) des Flüssigkeitstanks (14) ausgestattet ist.

## Revendications

1. Dispositif d'auto-distribution de liquide pour les petits animaux, comprenant un réservoir de liquide (14) et un plateau (2) pour recevoir le liquide d'un élément de distribution fixé au réservoir de liquide (14), le plateau (2) étant établi sur une base large (1), **caractérisé en ce que** la base large (1) comprend un prolongement (1') dans lequel est défini un appendice supérieur (3), une tige (4) étant apte à s'y enficher et étant équipée d'un corps de dosage (5), dans lequel un segment initial cylindrique (5') est défini, pourvu de moyens d'accouplement au goulot (13) du réservoir de liquide (14), corps de dosage (5) dans lequel une marche ou un siège inférieur (11) est établi, qui se prolonge vers le bas dans un goulot (6) servant de buse de dosage pour le raticide liquide, de sorte qu'un corps de vanne allongé (7) se déplace dans ledit goulot (6), avec une bride périphérique (8) pour appui et étanchéité sur le siège (11), le corps de vanne (7) présentant un jeu par rapport au goulot (6) dans lequel il est mobile à la fois axialement et angulairement, l'extrémité (9) du corps de vanne (7) faisant saillie dudit goulot (6), définissant les moyens d'actionnement du dispositif, ledit corps de vanne étant poussé vers la position de fermeture de vanne au moyen d'un élément élastique (12) qui est agencé dans une position variable dans le goulot (13) du réservoir de liquide (14) et à l'intérieur du corps de dosage (5), avec la particularité que le goulot (13) du réservoir de liquide (14) et le segment cylindrique initial (5') du corps de dosage (5) incluent des moyens de filetage complémentaires, un évidement périphérique étagé étant établi dans ledit corps de dosage (5) sur lequel l'élément élastique (12) s'appuie, ledit élément élastique étant comprimé en fonction du niveau auquel il est assemblé par rapport au goulot (13) du réservoir de liquide (14) et au corps de dosage (5).

2. Dispositif d'auto-distribution de liquide pour petits animaux, selon la revendication 1, **caractérisé en ce que** le goulot (6) servant de buse en position d'assemblage sur la base (1) est agencé légèrement en dessous du niveau de remplissage maximal permettant la configuration du plateau (2).

3. Dispositif d'auto-distribution de liquide pour les petits animaux, selon la revendication 1, **caractérisé en ce que** la bride (8) de l'élément de vanne (7) est complétée par un joint d'étanchéité (11).

4. Dispositif d'auto-distribution de liquide pour petits animaux, selon la revendication 1, **caractérisé en ce que** l'élément élastique (12) inclut sur sa face supérieure une série de pointes ou lames (16) pour couper un joint (15) dont est équipé le goulot (13) du réservoir de liquide (14).
